# EUROPÄISCHE PATENTSCHRIFT

(11) **EP 1 246 203 B1**
(45) Veröffentlichungstag und Bekanntmachung des Hinweises auf die Patenterteilung: **31.05.2006**
(21) Anmeldenummer: 02006334.3
(22) Anmeldetag: 21.03.2002
(51) Int. Cl.: G21C 21/02, G21C 3/62

(54) **Verfahren zur Herstellung eines Kernbrennstoff-Sinterkörpers und Kernbrennstoff-Sinterkörper**
Method for manufacturing a nuclear fuel sintered body and nuclear fuel sintered body
Procédé de fabrication d'un élément fritté de combustible nucléaire et produit obtenu

(30) Priorität: 27.03.2001 DE 10115015
(43) Veröffentlichungstag der Anmeldung: 02.10.2002
(73) Patentinhaber: Framatome ANP GmbH, 91058 Erlangen (DE)
(72) Erfinder: Gradel, Gerhard, 91301 Forchheim (DE); Dörr, Wolfgang, Dr., 91074 Herzogenaurach (DE)
(74) Vertreter: Mörtel & Höfner

(56) Entgegenhaltungen:
- EP-A- 0 316 623
- EP-A- 0 317 772
- EP-A- 0 317 774
- WO-A-00/00985
- WO-A-97/43769
- GB-A- 809 693
- US-A- 3 010 890
- DATABASE WPI Section Ch, Week 199516 Derwent Publications Ltd., London, GB; Class K05, AN 1995-119413 XP002203987 & JP 07 043487 A (NIPPON KAKUNENRYO KAIHATSU KK), 14. Februar 1995 (1995-02-14)
- PATENT ABSTRACTS OF JAPAN vol. 013, no. 212 (P-873), 18. Mai 1989 (1989-05-18) & JP 01 029796 A (MITSUBISHI ATOM POWER IND INC), 31. Januar 1989 (1989-01-31)
- DATABASE WPI Section Ch, Week 198105 Derwent Publications Ltd., London, GB; Class K05, AN 1981-06685D XP002203988 & JP 55 151292 A (TOKYO SHIBAURA ELECTRIC CO), 25. November 1980 (1980-11-25)
- DATABASE WPI Section Ch, Week 198033 Derwent Publications Ltd., London, GB; Class K05, AN 1980-57934C XP002203989 & JP 55 087993 A (TOKYO SHIBAURA ELECTRIC CO), 3. Juli 1980 (1980-07-03)
- DATABASE WPI Section Ch, Week 198039 Derwent Publications Ltd., London, GB; Class K05, AN 1980-68518C XP002203990 & JP 55 104791 A (TOKYO SHIBAURA ELECTRIC CO), 11. August 1980 (1980-08-11)

## Beschreibung

Die Erfindung betrifft ein Verfahren zur Herstellung eines Kernbrennstoff-Sinterkörpers, bei dem ein ein spaltbares Schwermetalloxid enthaltendes Pulver hergestellt, weiterbehandelt und gesintert wird, sowie einen Kernbrennstoff-Sinterkörper hergestellt aus einem ein spaltbares Schwermetalloxid enthaltendes Pulver.

Für Nuklearreaktoren werden Kernbrennstoffe in der Regel in Brennelementen bereitgestellt. Diese können je nach Reaktortyp unterschiedliche Bauweisen und geometrische Formen (z. B. Platten oder Stäbe) aufweisen. Bei üblichen Leichtwasserreaktoren werden Kernbrennstoffe in Form von Brennstäben bereitgestellt, die gebündelt zu einem Brennelement zusammengefaßt sind. Dabei sind die Brennstäbe in der Regel entlang einer Brennelementachse angeordnet und in mehreren Ebenen senkrecht zur Brennelementachse jeweils durch die Maschen eines Abstandhalters geführt, wodurch sie seitlich beabstandet gehalten und zum Teil federnd gelagert sind. Die in einem Leichtwasserreaktorkem nebeneinander angeordneten Brennelemente werden in der Regel von unten mit Wasser angeströmt, das die durch den Kernspaltungsprozeß im Kernbrennstoff erzeugte Wärme abführt und gleichzeitig als Neutronenmoderator wirkt. Unter Leichtwasserreaktoren sind alle mit Leichtwasser als Kühlmittel arbeitenden Reaktoren zu verstehen, insbesondere Siedewasserreaktoren, Druckwasserreaktoren und auch Reaktoren russischer Bauart (VVER-Reaktoren).

Das den Kernbrennstoff umschließende Hüllrohr eines Brennstabs weist in der Regel zu überwiegendem Teil eine nur wenig neutronenabsorbierende ZirkoniumLegierung auf. Der Kernbrennstoff ist üblicherweise in Form einer aus zylindrischen, gesinterten Formkörpern (Pellets, Kernbrennstoff-Sinterkörper, Sinterkörper) gestapelten Säule im Hüllrohr angeordnet. Das Hüllrohr sollte dabei auf der Außenseite gegenüber dem Kühlmittel u. a. möglichst gute Korrosionseigenschaften, also eine hohe Korrosionsbeständigkeit, aufweisen. Außerdem sollte es sicher und zuverlässig in der Lage sein, den Kernbrennstoff und auch bei der Kernreaktion entstehende Kernspaltprodukte, wie z. B. Spaltgase, mindestens über den gesamten Einsatzzeitraum eines Brennelements sicher einzuschließen, um eine Kontamination des Kühlmittels sicher zu vermeiden. Dazu eignen sich Zirkonium-Legierungen, insbesondere Zirkaloy-Legierungen und Zirkonium-Legierungen im Verbund mit weiteren Materialien (z. B. als Beschichtung). In DWR und SWR können jedoch unterschiedliche Bedingungen, z. B. variierende Temperatur- und Druckbedingungen sowie transiente Schwankungen dieser Parameter auftreten, die jeweils unterschiedliche Anforderungen an Hüllrohre und auch an den Brennstoff in diesen Reaktoren zur Folge haben. Dementsprechend sind unterschiedliche Materialien in Siedewasserreaktoren bzw. Druckwasserreaktoren üblich.

Da das Hüllrohr die Kernbrennstoff-Sinterkörper in der Regel eng umschließt, sollte dieses auf der Innenseite insbesondere Formänderungen der Kernbrennstoff-Sinterkörper während des Reaktorbetriebs aufnehmen können. Da die Außenseite und die Innenseite eines Hüllrohrs also unterschiedlichen Anforderungen genügen sollen, sind inzwischen zweischichtige Hüllrohre gebräuchlich. Insbesondere werden Hüllrohre auf ihrer Innenseite möglichst duktil ausgelegt, um u. a. die Formänderungen der Kernbrennstoff-Sinterkörper und die daraus resultierenden Brennstoff/Hüllrohr-Wechselwirkungen (Pellet-Cladding-Interaction - PCI) aufnehmen zu können. Das Hüllrohr sollte dazu ausreichend dehnbar sein und zum Teil auf kleiner Fläche und zeitlich zum Teil sehr kurzfristig und variabel und/oder statisch auftretende hohe Drücke aufnehmen können. Dies ist vor allem der Fall, wenn sich beispielsweise Bruchstücke eines Kembrennstoff-Sinterkörpers im Hüllrohr verklemmen.

Als Kernbrennstoffe können im Prinzip alle Arten von spaltbarem Schwermetall, insbesondere Schwermetalloxid, enthaltende Stoffe Verwendung finden. Diese umfassen insbesondere für Leichtwasserreaktoren gebräuchliche Kernbrennstoffe, die Uran und/oder Plutonium und/oder Thorium enthalten und als Pulver und/oder Sinterkörper vorliegen. Üblicherweise wird zur Herstellung eines Kernbrennstoff-Sinterkörpers zunächst ein Kernbrennstoffpulver mittels eines Konversionsverfahrens gewonnen.

Die bekannten Konversionsverfahren lassen sich grundsätzlich anhand eines Verfahrens zur Herstellung von UO₂ aus UF₆ unterscheiden. Dies sind zum einen trockenchemische Konversionsverfahren und zum anderen naßchemische Konversionsverfahren. Bei den naßchemischen Verfahren wird ein UO₂-Pulver indirekt aus Uranhexafluorid (UF₆) nach der Ausfällung und Abtrennung einer Zwischenstufe aus einer Lösung gewonnen. Bekannte Verfahren sind nach ihren Zwischenstufen benannt, so das AUC-Verfahren (Ammonium Uranylcarbonat)und das ADU-Verfahren (Ammonium-Diuranat). Die naßchemischen Konversionsverfahren weisen eine besonders hohe radioaktive Abfallerzeugung auf, was erhebliche ökologische und ökonomische Nachteile im Vergleich zu den trockenchemischen Verfahren mit sich bringt.

Bei trockenchemischen Konversionsverfahren (Dry Conversion, DC) wird in der Regel Uranhexafluorid (UF₆) mit Wasser und Wasserstoff direkt zu Urandioxid umgesetzt, und zwar in der Regel entsprechend der folgenden Gesamtgleichung: UF₆ + 2H₂O + H₂ → UO₂ + 6HF.

Das dabei entstehende UO₂-haltige Pulver (DC-Pulver) kann als überwiegender Grundstoff zur Herstellung eines üblichen Kernbrennstoffpulvers und/oder eines Mischoxid-Kernbrennstoff-Pulvers (MOX-Kernbrennstoffpulver) genutzt werden. Zur Herstellung eines MOX-Kembrennstoffpulvers kann beispielsweise ein UO₂₋haltiges Pulver mit weiteren Pulvern, die spaltbare Schwermetalloxide enthalten, beispielsweise U₂O₃, PuO₂ oder ThO₂ oder Verbindungen daraus, zu einem MOX-Kernbrennstoffpulver gemischt werden.

Das Kernbrennstoffpulver wird nach seiner Herstellung weiterbehandelt. Dabei werden zum Teil u. a. zur Beeinflussung der Eigenschaften eines Kernbrennstoff-Sinterkörpers und/oder aus für das Herstellungsverfahren relevanten Gründen einem Kernbrennstoffpulver Additive zugegeben.

Dieses Pulver wird üblicherweise zu Formkörpem verpreßt und die Formkörper werden zu Kembrennstoff-Sinterkörpem gesintert. Beim Sintern wachsen die Kristallite des Ausgangspulvers zu Körnern im Sinterkörper zusammen. Die Größe der Körner eines Kernbrennstoff-Sinterkörpers ist durch eine Vielzahl von Parametern beim Herstellungsprozeß und/oder beim Ausgangspulver beeinflußbar. Die Korngröße hat dabei maßgeblichen Einfluß u. a. auf die mechanischen Eigenschaften, insbesondere die Plastizität des Sinterkörpers und/oder auf seine Eigenschaften hinsichtlich der Spaltgasrückhaltung.

Aus der US 4,869,866 ist bekannt, daß ein Sinterkörper mit sowohl guter Spaltgasrückhaltung als auch verbesserten PCI-Eigenschaften von Interesse ist. Dazu ist allerdings das vollständige Einschließen so gut wie aller Körner eines Kernbrennstoff-Sinterkörpers mit einer glasartigen Aluminium-Silikat-Phase vorgesehen. Gemäß der US 4,869,867 und der US 4,869,868 kann dazu auch eine vollumschließende glasartige Magnesium-Silikat-Phase oder eine vollumschließende Magnesium-Aluminium-Silikat-Phase vorgesehen sein.

Gemäß der JP 01029796 ist es zur Verbesserung der Spaltgasrückhaltung und der PCI-Eigenschaften vorteilhaft, Cr₂O₃ in einer Menge von 1000-3000ppm einem Kernbrennstoffpulver zuzugeben, um das Kornwachstum beim Sinterprozeß zu beschleunigen.

Weitere Veröffentlichungen beschränken sich entweder nur auf Maßnahmen zur bloßen Förderung des Kornwachstums oder aber nur auf Maßnahmen zur bloßen Verminderung der PCI.

Die JP 55151292 sieht eine Zugabe einer Additiv-Komposition ausschließlich zur Erhöhung der Korngröße vor. Neben einer Vielzahl weiterer Additiven ist in einem Beispiel auch Fe₂O₃ in einer Menge von 50ppm erwähnt.

Gemäß der JP 55087993 soll eine Reihe von Oxiden in hoher Dosierung 2000-50000ppm als Additive zu einem Kernbrennstoffpulver zugegeben werden, um eine hohe Anzahl von Sauerstoff-Fehlstellen zu erzeugen, die als Spaltgasfangstellen dienen.

Gemäß der JP 55104791 ist ein zweischaliger Kernbrennstoff-Sinterkörper mit einer Vielzahl von Additiven in einer hohen Menge bis 50000ppm vorgesehen, um mittels der äußeren Schale ausschließlich die PCI-Eigenschaften des Kernbrennstoff-Sinterkörpers zu verbessern, während mittels der inneren Schale die mechanische Härte des Kernbrennstoff-Sinterkörpers verbessert werden soll.

Kernbrennstoffe für Leichtwasserreaktoren setzen im Normalbetrieb und vor allem auch bei Leistungsrampen des Kernreaktors Spaltgase frei. Die Freisetzungsrate hängt dabei unter anderem von der Korngröße ab, die der Kernbrennstoff-Sinterkörper aufweist. Desweiteren unterliegt der Kernbrennstoff-Sinterkörper während des Einsatzes im Kernreaktor Dimensionsschwankungen, die insbesondere bei einer Dimensionszunahme zu einer Wechselwirkung des Kernbrennstoff-Sinterkörpers mit dem Hüllrohr führen (PCI-Eigenschaften). Auch diese Wechselwirkung hängt unter anderem von der Korngröße ab, die der Kernbrennstoff-Sinterkörper aufweist.

Aus der WO 00/00985 ist ein Kernbrennstoff-Pellet bekannt, bei dem durch Zugabe eines Nb enthaltenden Dotierungsstoffes ein besonders günstiges Kornwachstum sowie ein besonders günstiges Kriechverhalten eingestellt werden soll.

Der Erfindung liegt die Aufgabe zugrunde, ein verbessertes Verfahren zur Herstellung eines Kernbrennstoff-Sinterkörper aus einem ein spaltbares Schwermetalloxidpulver enthaltenden Pulver anzugeben, der sowohl hinsichtlich der Spaltgasfreisetzung als auch der Kembrennstoff-Sinterkörper/Hüllrohr-Wechselwirkung (PCI-Eigenschaften) verbesserte Eigenschaften aufweist. Dabei sind insbesondere die Eigenschaften eines Kernbrennstoffpulvers aus einem trockenchemischen Konversionsverfahren sowohl hinsichtlich einer verbesserten Spaltgasrückhaltung als auch verbesserten PCI-Eigenschaften zu berücksichtigen.

Die Aufgabe wird erfindungsgemäß gelöst durch ein Verfahren zur Herstellung eines Kernbrennstoff-Sinterkörpers, bei dem ein ein spaltbares Schwermetalloxid enthaltendes Pulver hergestellt, weiterbehandelt und gesintert wird, wobei das Pulver ein sinteraktives Schwermetalloxidpulver umfaßt, welches zu überwiegendem Teil aus einem trocken-chemischen Konversionsverfahren gewonnen wird, und dem Pulver ein sowohl die Korngröße als auch die Plastizität des Sinterkörpers erhöhender Dotierungsstoff, der mindestens 100ppm einer Eisenverbindung, insbesondere einer Eisenoxid-Verbindung, enthält, zugegeben wird.

Dabei gibt die Mengenangabe 100ppm den Gewichtsanteil der Eisenverbindung, insbesondere der Eisenoxid-Verbindung, im Verhältnis zum Gesamtgewichtsanteil des Schwermetalloxids im fertigen Kernbrennstoff-Sinterkörper an (also in µg/g, was Gewichts-ppm entspricht). Bei der Eisenverbindung kann es sich gegebenenfalls auch um Eisen handeln.

Das Verfahren gemäß der Erfindung weist zunächst insbesondere den Vorteil auf, daß es sich im Rahmen bestehender Fertigungswege und -abfolgen einer Trockenkonversion durchführen läßt. Eine Eisenverbindung, insbesondere eine Eisenoxid-Verbindung, läßt sich leicht (beispielsweise durch direkte Zugabe) zum Kernbrennstoffpulver, z. B. vor oder nach einem Granulierungsvorgang oder beim Mahlen, zugeben. Auch läßt sich aufgrund des ferromagnetischen Verhaltens der Eisenpartikel ein Kernbrennstoff-Sinterkörper leicht in einem Hüllrohr lokalisieren, was Vorteile beim Fertigungsprozeß und bei der Prozeßüberwachung, insbesondere bei der Brennelementfertigung, hat.

Der Erfindung liegt dabei die überraschende Erkenntnis zugrunde, daß eine gezielte Zugabe des eisenhaltigen Dotierungsstoffs im Vergleich zu einem herkömmlichen Brennstoff sowohl eine Erhöhung der Korngröße als auch eine Erhöhung der Plastizität bewirkt. Somit können diese beiden eigentlich gegenläufigen Parameter besonders günstig eingestellt werden, so daß der Sinterkörper sowohl hinsichtlich der Freisetzung von Spaltgasen als auch hinsichtlich seiner PCI-Eigenschaften ein besonders günstiges Betriebsverhalten zeigt. Aufwendige oder zusätzliche Maßnahmen, wie z. B. ein vollständiges Umschließen von Körnern mit einer Silikat-Phase eines Additivs, werden unter anderem dann überflüssig, wenn das Korn gemäß der Erfindung bereits eine gezielt günstige Größe aufweist.

Bei Tests und Versuchen zu dieser Erfindung an unterschiedlichsten Kembrennstoff-Sinterkörpern im Reaktoreinsatz hat sich deutlich gezeigt, daß die Freisetzungsrate von Spaltgasen bei Sinterkörpern mit grobem Korn, also hoher Korngröße, geringer ist, d. h. die Freisetzungsrate nimmt mit zunehmender Korngröße des Sinterkörpers ab. Einerseits verbleiben nämlich die Spaltgase bei grobem Korn zum großen Teil im Korn und andererseits ist bei grobem Korn die Diffusion von Spaltgasen an den Korngrenzen stark herabgesetzt. Demgegenüber ist weiterhin in Tests und Versuchen zu dieser Erfindung festgestellt worden, daß bei Sinterkörpern mit feinem Korn, also kleiner Korngröße, die Wechselwirkung des Sinterkörpers mit dem Hüllrohr geringer ist, d. h. insbesondere das Hüllrohr trotz einer Dimensionsänderung des Sinterkörpers eine geringere Dehnung aufweist. Feinkörnige Sinterkörper weisen nämlich im Vergleich zu grobkörnigen Sinterkörpern ein höhere Plastizität auf, was sich in einer besseren Kriechfähigkeit bei feinkörnigen Sinterkörpern äußert. Dadurch ist eine Beanspruchung und gegebenenfalls eine Dehnung eines Hüllrohrs infolge einer Dimensionszunahme des Sinterkörpers deutlich herabsetzbar.

Es besteht also eine Diskrepanz zwischen einem Bestreben, bei einem Kernbrennstoff-Sinterkörper eine Spaltgasfreisetzung zu verringern und ebenso eine Kernbrennstoff-Sinterkörper/Hüllrohr-Wechselwirkung zu verringern. Nach der Erkenntnis der Erfindung wird diese Diskrepanz aber überwunden durch eine gezielte Dotierung mit einer Eisenverbindung, die eine günstige Einstellung der Korngröße und zusätzlich eine günstige Einstellung weiterer charakteristischer Parameter, insbesondere der Plastizität, ermöglicht.

Durch die Dotierung des Kernbrennstoffs mit einem Dotierungsstoff, der mindestens 100ppm einer Eisenverbindung, insbesondere einer Eisenoxid-Verbindung, enthält (und gegebenenfalls gemäß einer Weiterbildung der Erfindung mit einem Dotierungsstoff, der zusätzlich Verbindungen von Silizium, Aluminium oder Chrom enthält), wird nach der Erkenntnis der Erfindung die Korngröße moderat und gezielt erhöht. Sie wird genauso eingestellt, daß zum einen die Spaltgasfreisetzung erniedrigt und zum anderen die Plastizität gegenüber herkömmlichen Brennstoffen mit gleicher oder kleinerer Korngröße erhöht wird. Gemäß der Erfindung hat diese Maßnahme die kombinierte Wirkung sowohl einer geringeren Spaltgasfreisetzung als auch einer geringeren Brennstoff/Hüllrohr-Wechselwirkung. Durch die gezielte Dotierung des Brennstoffs mit mindestens 100ppm einer Eisenverbindung, insbesondere mit einer Eisenoxid-Verbindung, und insbesondere gegebenenfalls zusätzlich mit einer Silizium- und/oder Aluminium- und/oder Chrom-Verbindung, ist ein Kernbrennstoff-Sinterkörper herstellbar mit Eigenschaften, die sich bisher auszuschließen schienen, nämlich sowohl Grobkörnigkeit als auch verbesserte Plastizität.

Nach der Erkenntnis der Erfindung ist vorteilhafterweise vorgesehen, die Dotierungsstoffzugabe unter Berücksichtigung der Eigenschaften eines Pulvers vorzunehmen, welches nämlich zu überwiegendem Teil in einem trockenchemischen oder einem anderen direkten Konversionsverfahren gewonnen wird.

Bei aus naßchemischen Verfahren gewonnenen Pulvern liegt die Größe der beim Sintern zu Körnern verschmelzenden Kristallite nämlich mit üblicherweise weniger als 100nm deutlich unter der Kristallitgröße von aus trockenchemischen Verfahren gewonnen Pulvern (250nm+/-100nm). U.a. deshalb sintern die naßchemischen Pulver zu einem früheren Zeitpunkt beim Sinterprozeß und ausgehend von einer geringen Sinterdichte. Dagegen ist das Sinterverhalten von aus trockenchemischen Verfahren gewonnenen Pulvern träger und erfolgt ausgehend von einer größeren Sinterdichte. Aus dem ADU-Verfahren gewonnenes Pulver hat beispielsweise eine BET-Oberfläche von mindesten 4 m²/g, dagegen hat aus einem trockenchemischen Verfahren gewonnenes Pulver beispielsweise eine Oberfläche von 0.5-4 m²/g, i.d.R. um 2 m²/g (BET-Oberfläche: eine nach dem BET-Verfahren gemessene spezifische Oberfläche).

Würde man von einem aus einem naßchemischen Konversionsverfahren gewonnenen Pulver ausgehen (z. B. ADU-Pulver), so löste sich ein Dotierungsstoff in den kleinen Kristalliten des ADU-Pulvers besser als in einem Kristallit eines aus einem trockenchemischen Konversionsverfahren gewonnen Pulver, so daß das Korn des ADU-Pulvers schneller wachsen würde und damit der Sinterkörper aufgrund eines zu großen Korns zu hart würde. Gleiche Mengen an Dotierungsstoff haben damit bei einem aus einem naßchemischen Verfahren gewonnen Pulver einerseits und bei einem aus einem trockenchemischen Verfahren gewonnen Pulver andererseits ganz unterschiedliche Auswirkungen.

Bei einem DC-Pulver löst sich nämlich ein Dotierungsstoff in vorteilhafter Weise insgesamt weniger gut im Kristallit des Ausgangspulver und dem daraus entstehenden Korn während des Sinterprozesses, da die Kristallite von vornherein größer sind und langsamer sintern als bei einem Pulver aus einem naßchemischen Verfahren z. B. einem ADU-Pulver. Diese zunächst nachteilig erscheinende Eigenschaft des DC-Pulvers wird nach der Erkenntnis der Erfindung aber in vorteilhafter Weise genutzt. Das hat erhebliche Vorteile sowohl für ein Verfahren als auch für einen Sinterkörper gemäß der Erfindung. Damit ist beim Sintern eines DC-Pulvers gemäß der Erfindung nämlich zum einen das Kornwachstum nicht zu stark aber groß genug, um eine ausreichende Plastizität bei guter Spaltgasrückhaltung zu gewährleisten, führt also zu einem moderat großen Korn. Zum anderen verbleibt ein Teil des Dotierungsstoffs außerhalb des Korns und erhöht die Korngrenzengleitung bei moderat großem Korn und damit die Plastizität bei moderat großem Korn. Der Dotierungsstoff wird also insbesondere in einer Menge zugegeben, die eine moderat großkörnige Mikrostruktur und eine hohe Plastizität des Kembrennstoff-Sinterkörpers bewirkt.

Insbesondere mit zunehmendem Reaktoreinsatz erfährt ein Kernbrennstoff-Sinterkörper eine Volumen- und demzufolge eine Durchmesserzunahme, was zu einer beträchtlichen Beanspruchung und gegebenenfalls Dehnung des Hüllrohrs führen kann. Dies wird umso wichtiger, desto länger die Einsatzzeit eines Brennelements mit einem solchen Kernbrennstoff-Sinterkörper ist, beispielsweise drei und mehr Einsatzzyklen. Dies ist der Fall bei Brennstoffen mit einem Abbrandpotential von 30MWd/kgSM bis hin zu 80MWd/kgSM oder mehr (High-Burn-Up). Eisenverbindungen und insbesondere Eisenoxid-Verbindungen als Dotierungsstoff haben dabei im Vergleich zu anderen Dotierungsstoffen den Vorteil, daß sie eine Plastizität eines Kembrennstoff-Sinterkörpers gemäß der Erfindung auch für lange Einsatzzeiten eines Brennelements ermöglichen. Hinsichtlich des über das genannte Verfahren hergestellten Kembrennstoff-Sinterkörpers hat dieser also den Vorteil, daß er seine Plastizität auch bei drei und mehr Einsatzzyklen eines Brennelements weitgehend behält und auch noch eine ausreichende Spaltgasrückhaltung aufweist.

Speziell eine Eisenverbindung und insbesondere eine Eisenoxid-Verbindung wirkt im Vergleich zu üblichen Dotierungsstoffen bei moderatem Korn im übrigen auch nicht so stark diffusionsbeschleunigend hinsichtlich der Spaltgasrückhaltung. Üblicherweise ist mit der Komgrößenerhöhung durch eine Dotierungsstoffzugabe zwar auch eine schlechtere Spaltgasrückhaltung durch eine auch durch den Dotierungsstoff erhöhte Grenzflächendiffusion für Spaltgase verbunden. Dieser Nachteil anderer Dotierstoffe ist bei einer Eisen-Verbindung und insbesondere einer Eisenoxid-Verbindung als Dotierungsstoff jedoch nicht vorhanden, wie sich überraschenderweise herausgestellt hat.

Speziell eine Eisenoxid-Verbindung löst sich vorteilhaft gut im Fluorit-Gitter des Schwermetalloxids und gibt dabei Sauerstoff ab. Dieser ist maßgeblich für das Kornwachstum verantwortlich, da er die Beweglichkeit der Schwermetallatome beträchtlich erhöht.

Andererseits behält speziell Eisenoxid im Vergleich zu anderen Dotierstoffen aufgrund seiner hohen Wertigkeit beim Sintern ausreichend lang den Sauerstoff (Fe₂O₃, FeO, FeOH) und fördert deshalb das Kornwachstum besser als andere Dotierungsstoffe bei einem aus einem trockenchemischen Konversionsverfahren gewonnenen Kernbrennstoffpulver (DC-Pulver). Übliche Dotierungsstoffe reduzieren für den oben beschriebenen etwas trägeren Komwachstumsprozeß oder Sinterprozeß bei einem DC-Pulver (beispielsweise im Vergleich zu einem ADU-Pulver) zu schnell zu Metallen. Trotzdem erhöht Eisenoxid als Dotierungsstoff die Korngröße vorteilhaft nur bis auf eine moderate Größe von 10µm bis 25µm oder auch 30µm, so daß sowohl der Aufbau großer, also auch scharfkantiger Körner unterbunden wird und damit eine ausreichende Plastizität des Kembrennstoff-Sinterkörpers gewährleistet ist. Dies ist äußerst vorteilhaft für die PCI-Eigenschaften des Kernbrennstoff-Sinterkörpers. Durch andere Dotierungsstoffe, wie Ti, Nb und Cr, zum Teil erzielbare Korngrößen von 30µm bis 80µm sind für die PCI-Eigenschaften weniger vorteilhaft.

Gemäß einer vorteilhaften Weiterbildung der Erfindung enthält der Dotierungsstoff also eine Eisenoxid-Verbindung, insbesondere eine aus der Gruppe bestehend aus: FeO, Fe₂O₃, Fe₃O₄, Fe(OH)₂ und Fe(OH). Insgesamt zeigt Eisenoxid als Dotierungsstoff damit eine gute Verträglichkeit mit den Eigenschaften eines DC-Brennstoffpulvers, insbesondere auch bei Herstellungsverfahren hinsichtlich des Untermischverhaltens und des Sinterverhaltens.

Vorteilhafte Weiterbildungen der Erfindung, insbesondere bezüglich des Verfahrens, sind im folgenden aufgeführt sowie den Unteransprüchen zu entnehmen.

Das spaltbare Schwermetalloxid enthält vorteilhafterweise ein Oxid eines Schwermetalls aus der Gruppe bestehend aus: Uran, Plutonium und Thorium, und/oder eine Verbindung des Schwermetalls, insbesondere UO₂ und/oder PuO₂ und/oder ThO₂. Dies betrifft vor allem auch die Herstellung von MOX-Brennstoffen.

Gegebenenfalls enthält das Pulver günstigerweise auch ein Element aus der Gruppe bestehend aus Beryllium und Molybdän, und/oder eine Verbindung der Elemente. Dadurch wird die Wärmeleitfähigkeit des Kembrennstoff-Sinterkörpers in vorteilhafter Weise erhöht.

Vorzugsweise enthält das Pulver ein U₃O₈-Pulver, das durch Oxidation eines aus einem trocken-chemischen oder einem anderen direkten Konversionsverfahren gewonnenem UO₂-Pulver gewonnen wird. Es ist gegebenenfalls allerdings auch möglich, daß das Pulver ein U₃O₈-Pulver enthält, das durch Oxidation eines aus einem naß-chemischen Verfahren, insbesondere einem AUC- oder ADU-Verfahren, gewonnenem UO₂-Pulver gewonnen wird.

Günstigerweise weist das Pulver feindisperse Teilchen von im wesentlichen 1-1000µm Größe, insbesondere von im Mittel 50µm bis 150µm Größe, auf. Insbesondere weist ein solches Pulver auch Kristallite von im wesentlichen 50-500nm Größe, insbesondere von im Mittel 100nm bis 350nm Größe, auf. Dies sind besonders vorteilhafte Eigenschaften eines Pulvers aus einem trockenchemischen oder einem anderem direkten Konversionsverfahren, die sich gemäß der Erkenntnis der Erfindung insbesondere auf die sich beim Sintervorgang einstellende Korngröße vorteilhaft auswirken.

Vorteilhafterweise wird das Pulver zur Weiterbehandlung homogenisiert und/oder gemahlen. Insbesondere wird das Pulver zur Weiterbehandlung vorkompaktiert und/oder granuliert, günstigerweise bis zu einer Teilchengröße von im wesentlichen weniger als 2mm. Dies verbessert die Rieselfähigkeit des Pulvers, erleichtert also den Verfahrensablauf, insbesondere das Einfüllen des Pulvers in Preßmatrizen zum Pressen des Pulvers (vor dem Sintervorgang).
Günstigerweise enthält der Dotierungsstoff neben einer Eisenverbindung eine Chrom-Verbindung aus der Gruppe bestehend aus: Cr₂O₃ und CrO₃.

Weiter enthält der Dotierungsstoff günstigerweise eine Silizium- und/oder Silikat-Verbindung, insbesondere eine Verbindung aus der Gruppe bestehend aus: Silizium-Oxid, Eisensilikat und Magnesium-Silikat. Vorzugsweise enthält der Dotierungsstoff auch eine Verbindung eines Elements aus der Gruppe bestehend aus: Magnesium, Niob, Titan, Aluminium, Vanadium und Platin, insbesondere ein Oxid des Elements. Dadurch können die erläuterten Vorteile der Erfindung in Kombination mit einer Eisenverbindung, insbesondere einer Eisenoxid-Verbindung, weiter verbessert werden. Dies gilt vor allem für eine Silizium- oder Aluminium-Verbindung, günstigerweise nicht in zu großer Menge.

Vorzugsweise wird der Dotierungsstoff zugegeben in einer Menge, die eine Mikrostruktur des Kembrennstoff-Sinterkörpers zur Folge hat, die eine Kornabmessung von im wesentlichen mehr als 8 µm, insbesondere eine Kornabmessung im Bereich von etwa 10-25µm aufweist. Besonders bevorzugt ist eine Korngröße von 10-15µm.

Desweiteren wird der Dotierungsstoff günstigerweise zugegeben in einer Menge, die eine günstige Plastizität des Kernbrennstoff-Sinterkörpers zur Folge hat, welche durch ein moderates Kriechverhalten des Sinterkörpers bei Temperaturen zwischen 1100°C und 1700°C und Drücken von etwa 70-160N/mm², insbesondere bei Temperaturen um etwa 1200°C und bei Drücken von etwa 70-90N/mm2 bestimmt ist.

Insbesondere übersteigt diese Menge eine im Gitter des Schwermetalloxids lösliche Menge des Dotierungsstoffs. Es erweist sich als besonders günstig, den Dotierungsstoff in einer Menge zwischen 100ppm und 5000-6000ppm, vorzugsweise in einer Menge zwischen 500ppm und 3000ppm, zuzugeben. Als besonders günstig haben sich Mengen zwischen 750ppm und 2500ppm erwiesen. Eine solche Menge ist dabei nicht so hoch, als daß ein Korn durch die Additivzugabe vollständig umschlossen würde (z. B. bei Silikaten).

Vorteilhaft wird der Dotierungsstoff dem Pulver in einem Schritt zu dessen Herstellung und/oder zu dessen Weiterbehandlung zugegeben, vorzugsweise vor einem Granulierungsschritt. Gegebenenfalls ist es auch günstig, den Dotierungsstoff bei einem und/oder nach einem Granulierungsschritt zuzugeben. Dazu wird der Dotierungsstoff günstigerweise pulverförmig zugegeben, wobei das Dotierungsstoffpulver eine Teilchengröße von im wesentlichen weniger als 5µm, vorzugsweise eine Teilchengröße von im wesentlichen weniger als 2µm, aufweist.

Nach einer Weiterbildung der Erfindung wird dem Pulver ein weiterer Dotierungsstoff zugegeben, der wenigstens eine Verbindung eines Stoffes aus der Gruppe bestehend aus: Zirkonium, Cer, Yttrium, Lanthan, Ytterbium, Cäsium, Calcium, alle weiteren Nebengruppen-Elemente, Lanthanid-Elemente und Actinid-Elemente, enthält. Dabei handelt es sich insbesondere um ein Oxid des Stoffes.

Günstigerweise wird dem Pulver ein Neutronengift zugegeben, insbesondere eine Gadolinium-Verbindung und/oder eine Bor-Verbindung und/oder eine Erbium-Verbindung. Dies erweist sich insbesondere zur Erreichung eines hohen Abbrands (High-Bum-Up) bei einem Brennelement als günstig. Dazu liegt vorteilhaft eine höhere Anreicherung des Schwermetalloxid-Pulvers vor. Diese kann zweckmäßigerweise 3,5% oder 4% überschreiten oder sogar 4,5-5% betragen. Die Anreicherung könnte auch 5% überschreiten, z. B. bei 6,5% liegen.

Zur besseren Verarbeitung des Pulvers erweist es sich als günstig, dem Pulver ein Gleitmittel zuzugeben, insbesondere einen Stoff aus der Gruppe bestehend aus: Stearatverbindung, Stearinsäure, Amid- Verbindung, Glycol-Verbindung und Parafin-Verbindung.

Ebenso erweist es sich zur Einstellung der Sinterdichte und aus Gründen der Spaltgasrückhaltung als vorteilhaft, dem Pulver einen Porenbildner zuzugeben, insbesondere einen Stoff aus der Gruppe bestehend aus: Ammoniumsalz, Ammonium-Carbonat, Acetat-Verbindung, Oxalat-Verbindung und Zuckerstärke. Besonders vorteilhaft erweist es sich, einen Porenbildner derart zuzugeben, daß sich im Sinterkörper eine Porengröße etwa zwischen 2-200 µm, insbesondere etwa zwischen 5-80µm, einstellt.

Günstigerweise werden der Dotierungsstoff oder mehrere weitere Additive, z. B. ein weiterer Dotierungsstoff, ein Neutronengift, ein Porenbildner oder ein Gleitmittel, dem Pulver und/oder dem weiterbehandelten Pulver gemeinsam zugegeben. Dies vereinfacht das Verfahren gemäß der Erfindung zusätzlich.

Vorteilhaft wird das Pulver vor dem Sintern zu Formkörpem gepreßt, die günstigerweise eine Dichte von etwa 4.5-7g/cm³ aufweisen.

Das Pulver (ein Formkörper) wird vorteilhaft im wesentlichen bei Temperaturen zwischen 1500°C und 1900°C und in einer Atmosphäre mit einem Druck im Bereich des Normaldrucks für eine Dauer von 2-8h gesintert.

Insbesondere wird das Pulver (ein Formkörper) etwa auf 93-98.5% der theoretischen Dichte gesintert. Die gesinterten Formkörper weisen danach günstigerweise eine Dichte von 10-20g/cm³, insbesondere eine Dichte von 10,0-10,8 g/cm³, auf.

Dazu wird das Pulver (ein Formkörper) günstigerweise in einer reduzierenden Inertgas-Atmosphäre gesintert. Die Inertgas-Atmosphäre enthält vorzugsweise zu überwiegendem Teil Inertgase, insbesondere He und/oder Ar, gegebenenfalls auch vorteilhaft mindestens ein weiteres Gas aus der Gruppe bestehend aus: H₂, N₂ und Co₂. Das Verhältnis von H₂ zu N₂ in der Inertgas-Atmosphäre wird vorteilhaft im wesentlichen zwischen 1:1 bis 3:1 eingestellt. Das Verhältnis zwischen der Menge der weiteren Gase und der Menge der Inertgase wird günstigerweise zwischen 0,02:1 und 0,08:1 eingestellt.

Beim Sintern wird dabei günstigerweise ein Sauerstoffpartialdruck der Inertgas-Atmosphäre derart eingestellt, daß U₃O₈-Anteile des Pulvers zu UO₂-Anteilen des Pulvers reduziert werden. Insbesondere wird ein Sauerstoffpartialdruck der Inertgas-Atmosphäre aber auch ebenso derart eingestellt, daß eine Reduzierung der Eisen-Oxid-Anteile des Pulvers zu Eisenanteilen des Pulvers vermieden wird.

Dazu ist es besonders günstig, den Bereich des Partialdrucks etwa von einem um 5% erniedrigten bis zu einem um 5% erhöhten Normaldruck einzustellen. Vorzugsweise wird der Sauerstoffpartialdruck der Inertgas-Atmosphäre zwischen 10⁻²⁰ und 10⁻⁶ atm eingestellt.

In einer ganz besonders vorteilhaften Ausgestaltung der Erfindung bezüglich des Verfahrens wird die Aufgabe demnach gelöst durch ein Verfahren zur Herstellung eines Kernbrennstoff-Sinterkörpers, bei dem ein wenigstens ein Schwermetalloxid enthaltendes Pulver hergestellt wird, wobei das Pulver ein sinteraktives UO₂₋Schwermetalloxid-Pulver enthält, welches zu überwiegendem Teil in einem trocken-chemischen oder einem anderen direkten Konversionsverfahren gewonnen wird, und insbesondere Teilchen von 1-1000µm Größe mit Kristalliten von 50-500nm Größe aufweist, und ein U₃O₈-Schwermetalloxid-Pulver enthält, welches zu überwiegendem Teil durch Oxidation aus einem Teil des sinteraktiven UO₂-Schwermetalloxid-Pulvers gewonnenen wird, und ggf. ein rückgeführtes U₃O₈-Schwermetalloxid-Pulver enthält, wobei das Pulver weiterbehandelt wird, und dem Pulver ein sowohl die Korngröße als auch die Plastizität des Sinterkörpers erhöhender Dotierungsstoff, der mindestens 100ppm einer Eisenverbindung, insbesondere einer Eisenoxid-Verbindung, enthält, zugegeben wird, das Pulver zu Formkörpem gepreßt wird, und die Formkörper bei Temperaturen zwischen 1500°C und 1900°C und in einer Atmosphäre mit einem Druck im Bereich des Normaldrucks für eine Dauer von 2-8h gesintert werden.

Vorteilhafte Weiterbildungen der Erfindung, insbesondere bezüglich des Kernbrennstoff-Sinterkörpers, sind im folgenden aufgeführt sowie den Unteransprüchen zu entnehmen.

Vorzugsweise enthält der Kernbrennstoff-Sinterkörper nämlich eine Eisenoxid-Verbindung, insbesondere eine aus der Gruppe bestehend aus: FeO, Fe₂O₃, Fe₃O₄ Fe(OH)₂ und Fe(OH)₃.

Zur Erreichung der Vorteile gemäß der Erfindung weist der Kernbrennstoff-Sinterkörper besonders vorteilhaft eine Mikrostruktur auf, die durch eine Kornabmessung von im wesentlichen mehr als 8 µm, insbesondere bis 15 µm, also einer Kornabmessung im Bereich von etwa 10-25µm, gekennzeichnet ist. Besonders bevorzugt ist eine Korngröße von 10-15µm.

Ebenso weist der Kernbrennstoff-Sinterkörper nach einer Weiterbildung der Erfindung vorzugsweise eine Porengröße von etwa zwischen 2-200 µm, insbesondere von etwa zwischen 5-80µm auf. Vorzugsweise weist er eine u.a. durch die Porengröße beeinflußte Dichte von 10-20g/cm³, insbesondere eine Dichte von 10,0-10,8 g/cm³ auf.

Ein Kernbrennstoff-Sinterkörper gemäß der Erfindung oder einer Weiterbildung der Erfindung weist demnach ebenso eine günstige Plastizität auf, die durch ein moderates Kriechverhalten bestimmt ist, insbesondere bei Temperaturen zwischen 1100°C und 1700°C und Drücken von etwa 70-160N/mm²,
insbesondere bei Temperaturen um etwa 1200°C, und bei Drücken von etwa 70-90N/mm².

Zur weitestgehenden Vermeidung der PCI sollte auch eine Anpassung des Brennstoffs an das Hüllrohr gemäß obiger Auslegungsmöglichkeiten erfolgen.

Anhand einer Zeichnung werden vorteilhafte Ausführungsbeispiele der Erfindung näher beschrieben. Im einzelnen zeigen:
- Figur 1: einen Prozeßablauf für ein Verfahren gemäß der Erfindung unter Verwendung eines aus einer Trockenkonversion (DC) gewonnenen UO₂-Pulvers,
- Figur 2: einen ersten Sinterkörper mit seiner Porenstruktur gemäß der Erfindung, mit einem Maßstab von 10µm, hergestellt unter Verwendung eines aus einer Trockenkonversion gewonnenen UO₂₋Pulvers mit 750ppm Fe₂O₃ als Dotierstoff,
- Figur 3: einen zweiten Sinterkörper mit seiner Kornstruktur gemäß der Erfindung, mit einem Maßstab von 50µm, hergestellt unter Verwendung eines aus einer Trockenkonversion gewonnenen UO₂₋Pulvers mit 750ppm Fe₂O₃ als Dotierstoff,
- Figur 4: einen dritten Sinterkörper mit seiner Kornstruktur gemäß der Erfindung, mit einem Maßstab von 20µm, hergestellt unter Verwendung eines aus einer Trockenkonversion gewonnenen UO₂₋Pulvers mit 750ppm Fe₂O₃ als Dotierstoff,
- Figur 5: einen vierten Sinterkörper mit seiner Kornstruktur gemäß der Erfindung, mit einem Maßstab von 50µm, hergestellt unter Verwendung eines aus einer Trockenkonversion gewonnenen UO₂₋Pulvers mit 2500ppm Fe₂O₃ als Dotierstoff,
- Figur 6: transientes Kriechverhalten von Sinterkörpern gemäß der Erfindung, hergestellt unter Verwendung eines aus einer Trockenkonversion gewonnenen UO₂-Pulvers mit 1500ppm Fe₂O₃ als Dotierstoff, bei einer Temperatur von 1400°C und einem Druck von 120MPa, im Vergleich zum transienten Kriechverhalten anderer Sinterkörper,
- Figur 7: Kriechraten von Sinterkörpern gemäß der Erfindung, hergestellt unter Verwendung eines aus einer Trockenkonversion gewonnenen UO₂-Pulvers mit 750ppm -4000ppm Fe₂O₃ als Dotierstoff, bei einer Temperatur von 1400°C, im Vergleich mit Kriechraten anderer Sinterkörper,
- Figur 8: Kriechraten von Sinterkörpern gemäß der Erfindung, hergestellt unter Verwendung eines aus einer Trockenkonversion gewonnenen UO₂-Pulvers mit 750ppm Fe₂O₃ als Dotierstoff, bei Temperaturen von 1400°C, 1500°C und 1600°C.

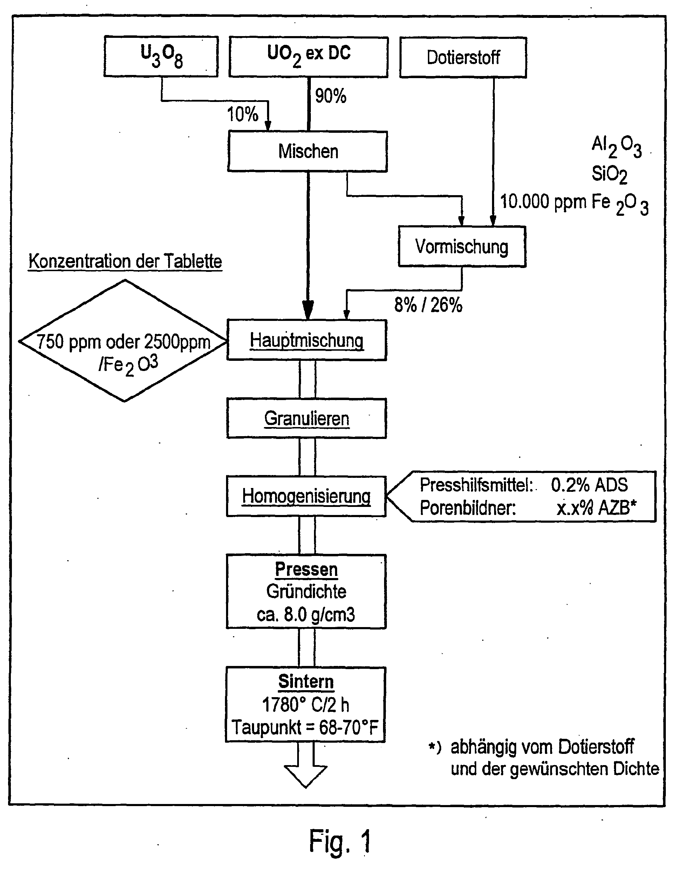

Der in Figur 1 gezeigte Verfahrensablauf eignet sich in besonders vorteilhafter Weise zur Herstellung eines Kernbrennstoff-Sinterkörpers mit einem Abbrandpotential von bis zu 80MWd/kgSM oder mehr. Selbstverständlich kann das gezeigte Verfahren standardmäßig auch für die Herstellung bereits jetzt und in der Vergangenheit üblicher Brennstoffe mit geringerem Abbrandpotential eingesetzt werden. Dies ist ein Vorteil, der in der einfachen und an bisherige Verfahren angepaßten Verfahrensführung begründet liegt.
Das Ausgangspulver umfaßt in einer ersten Mischung mit einem Anteil von etwa 90% ein sinteraktives UO₂-Pulver aus einem trocken-chemischen Konversionsverfahren und mit einem Anteil von etwa 10% ein U₃O₈-Pulver, das durch Oxidation eines aus einem trocken-chemischen Konversionsverfahren gewonnenen Pulvers gewonnen wird. Das U₃O₈-Pulver kann Rücklaufmaterial, wie z. B. beim Schleifen von Formkörpem anfallenden Schleifschlamm, umfassen. Der Anteil von U₃O₈-Pulver kann dabei auch bis zu etwa 15% betragen. Vor dem Mischprozeß wird das UO₂-Pulver vorzugsweise einer Homogenisierung unterzogen, um die Rieselfähigkeit zu erhöhen und beispielsweise Agglomerate und zusammenhängende Pulveranteile zu beseitigen. Zur wahlweise auch möglichen, hier aber nicht näher erläuterten Herstellung von MOX-Pulvem würden auch entsprechende Anteile z. B. von PuO₂-Pulver der Pulvermischung zugegeben werden.

Einem Teil dieser Mischung von UO₂- und U₃O₈-Pulver wird ein sowohl die Korngröße als auch die Plastizität des Sinterkörpers erhöhender Dotierstoff zugegeben. Dazu wird dem Teil der Mischung ein Dotierstoff zugegeben, der etwa 10000ppm Fe₂O₃, bezogen auf den Teil der Mischung (in Gewichts-ppm), enthält. Der Dotierstoff enthält bei diesem Ausführungsbeispiel auch weitere Anteile, z. B. von Al₂O₃ oder SiO. Die Anteile von Al₂O₃ oder SiO können aber auch in einem der folgenden Verfahrensschritte zusammen oder auch getrennt voneinander in verschiedenen Verfahrensschritten zugegeben werden. Sie können bevorzugt auch als Stearate oder in anderer Form getrennt voneinander zugegeben werden. Der Dotierstoff wird dem Teil der Mischung in einem Mischer untergemischt. Dies geschieht beispielsweise in einem Turbula-Mischer oder auch einem Nauta-Mischer. Zuvor oder währenddessen wird bei Bedarf der Teil der Mischung homogenisiert oder gemahlen. Im letzteren Fall spricht man auch von einem Mastermix-Vorgang.

Wie in der Figur angedeutet, kann der Teil der Mischung etwa 8% der Gesamtmenge der Mischung betragen. In diesem Fall führt dies zu einem Anteil von etwa 750ppm Fe₂O₃ bezogen auf die Gesamtmenge der Mischung. In einer ebenfalls bevorzugten Verfahrensführung beträgt der Teil der Mischung 26% der Gesamtmenge der Mischung. Dies führt dann zu einem Anteil von etwa 2500ppm Fe₂O₃ bezogen auf die Gesamtmenge der Mischung. Im Prinzip wird durch die Wahl der Menge des Teils der Mischung der Anteil des Fe₂O₃ bezogen auf die Gesamtmenge des Mischung eingestellt. Auf diese Weise ist die Zugabemenge des Dotierstoffs bezogen auf die Gesamtmenge der Mischung variabel zwischen 100ppm und einer Obergrenze, z. B. 6000ppm, festlegbar.

Die Zusammenführung der verbliebenen Mischung und des Teils der Mischung umfassend den Dotierstoff erfolgt in einem Siebschritt. Dabei wird die Gesamtmenge vorzugsweise in einer Hammermühle gesiebt. Die Menge des Dotierstoffs bezogen auf die Menge der Pulvermischung ist im wesentlichen die gleiche wie die Menge des Dotierstoffs bezogen auf die Gesamtmaterialmenge beim späteren Sinterkörper (in Gewichts-ppm), d. h. beim weiteren Verfahrensverlauf, insbesondere beim Sintervorgang, geht kaum Dotierstoff verloren.

Das gemäß Figur 1 ausgeführte Zumischverfahren des Dotierstoffs hat den Vorteil, daß dadurch eine besonders intensive mechanische Mischung des Dotierstoffs und der Pulvermischung erreicht wird. Dies führt zu einer besonders homogenen Verteilung des Dotierstoffs im Kernbrennstoff-Sinterkörper, was der Erreichung der Vorteile der Erfindung besonders zuträglich ist.

In weiteren Verfahrensschritten wird die Pulvermischung granuliert und anschließend homogenisiert. Die Granulierung wird vorteilhafterweise mittels eines Rollkompaktors durchgeführt, wobei insbesondere die oben angegebenen Dichtewerte und Granulenabmessungen erreicht werden.

Vor und/oder nach dem Granulierungsvorgang kann ebenfalls eine Zugabe von Al₂O₃ oder SiO erfolgen. Die Anteile von Al₂O₃ und SiO können dabei bis zu 500ppm an der Pulvermischung betragen. Bei der Homogenisierung erfolgt die Zugabe eines Schmiermittels und eines Porenbildners. Schmiermittel wird dabei in einer Menge von etwa 2000ppm zugegeben, während die Menge des Porenbildners abhängig von der gewünschten Enddichte des Sinterkörpers erfolgt. Dies ist nicht zuletzt auch von der Menge des verwendeten Dotierstoffs abhängig.

Die Pulvermischung wird danach zu Formkörpem gepreßt, die eine Dichte von etwa 6g/cm³ aufweisen sollten. Der Sintervorgang erfolgt etwa 2h lang bei einer Temperatur von 1780°C und einer feuchten H₂/N₂-Atmosphäre, deren Taupunkt bei etwa 68-70°F liegt.

Je nach Wahl der Menge von Fe₂O₃ als Dotierstoff in den bereits genannten Mengenbereichen kann bei moderat großem Korn und ausreichender Plastizität des Sinterkörpers eine leicht unterschiedliche Mikrostruktur des Sinterkörpers eingestellt werden. Dies könnte beispielsweise vorteilhaft zur Abstimmung des Kernbrennstoffs auf eine bestimmte Hüllrohrart erfolgen. Dabei könnten beispielsweise die Eigenschaften eines zweischichtigen Duplex- oder eines einschichtigen Simplexrohres berücksichtigt werden. Auch könnten dabei die Eigenschaften einer Zirkaloy-4-Legierung für einen DWR-Reaktor oder einer Zirkaloy-2-Legierung für einen SWR-Reaktor berücksichtigt werden.

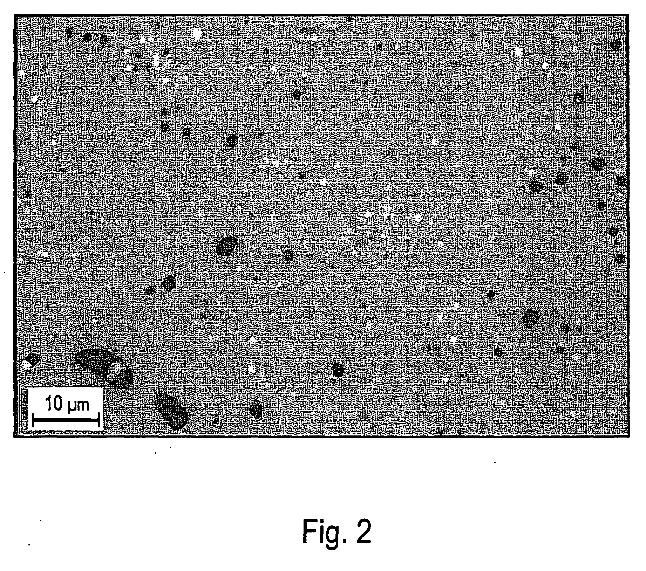

Bei Konzentrationen von 750ppm Fe₂O₃, also insbesondere von mehr als 100ppm, löst sich das Fe₂O₃ so gut wie vollständig im Korn des Sinterkörpers. Deutlich darüber, jedenfalls etwa bei Konzentrationen von 2500ppm Fe₂O₃ oder anderen Eisenverbindungen, wird ein Teil des Fe₂O₃ oder der anderen Eisenverbindungen auch an den Korngrenzen abgeschieden, was zusätzlich zu der allein schon durch die moderate Korngröße bewirkten Plastizität des Sinterkörpers zu einer höheren Komgrenzengleitfähigkeit beiträgt und damit der Plastizität weiter zuträglich ist. Bei sehr hohen Mengen von Dotierstoff, insbesondere bei Mengen von 4000ppm Fe₂O₃ oder mehr, bilden sich eisenhaltige, grobe, inselförmige oder clusterartige Ausscheidungen, die zum Teil auch Uran enthalten. Dies ist den Figuren 2 bis 5 zu entnehmen, welche bei Raumtemperatur aufgenommene Schliffbilder von Sinterkörpern gemäß der Erfindung zeigen.

Figur 2 zeigt einen ersten Sinterkörper mit seiner Porenstruktur gemäß der Erfindung, mit einem Maßstab von 10µm. Hergestellt ist der Sinterkörper unter Verwendung eines aus einer Trockenkonversion gewonnenen UO₂-Pulvers mit 750ppm Fe₂O₃ als Dotierstoff. Die dunklen Bereiche des Schliffbildes zeigen Poren an, die eine mittlere Größe von etwa 5-10µm aufweisen. Die hellen Bereiche sind nur bei Raumtemperatur sichtbare Eisenausscheidungen, welche bei den im Reaktorbetrieb herrschenden Temperaturen in Lösung gehen.

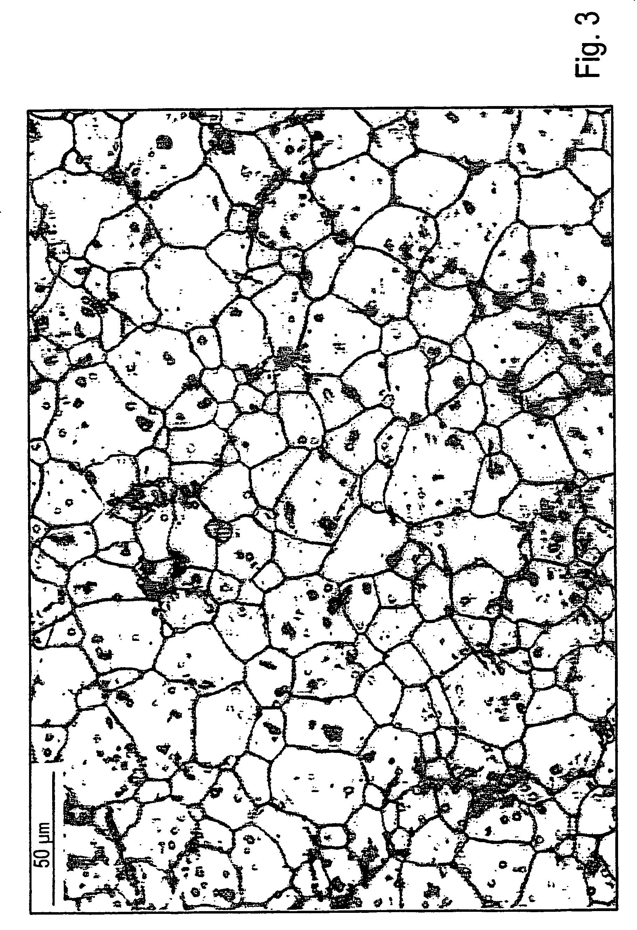

Figur 3 zeigt einen zweiten Sinterkörper mit seiner Kornstruktur gemäß der Erfindung, mit einem Maßstab von 50µm, Hergestellt ist der Sinterkörper unter Verwendung eines aus einer Trockenkonversion gewonnenen UO₂-Pulvers mit 750ppm Fe₂O₃ als Dotierstoff. Hier ist die Mikrostruktur zu erkennen, welche Korngrößen im wesentlichen zwischen 10-25µm aufweist.

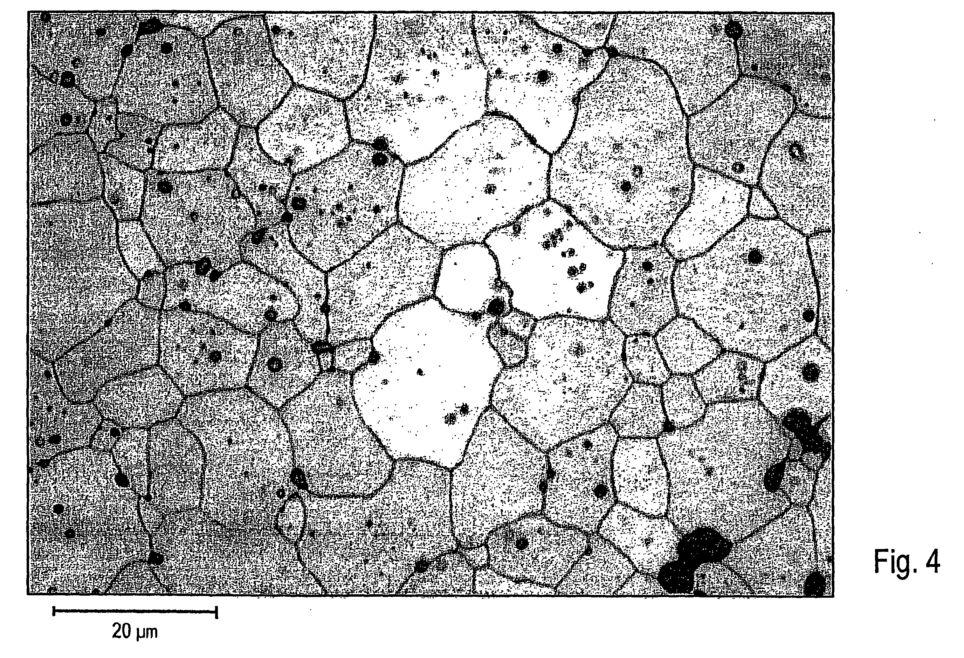

Figur 4 zeigt einen dritten Sinterkörper mit seiner Kornstruktur gemäß der Erfindung, mit einem Maßstab von 20µm. Hergestellt ist der Sinterkörper unter Verwendung eines aus einer Trockenkonversion gewonnenen UO₂-Pulvers mit 750ppm Fe₂O₃ als Dotierstoff. Hier sind die Korngrenzen deutlich zu erkennen. Die Korngrößen liegen wiederum im Mittel im Bereich um 10-25µm. Die Figur zeigt auch, daß lediglich vereinzelte Körner durchaus kleiner als 10µm, wieder andere, lediglich vereinzelte Körner größer als 25µm sein können.

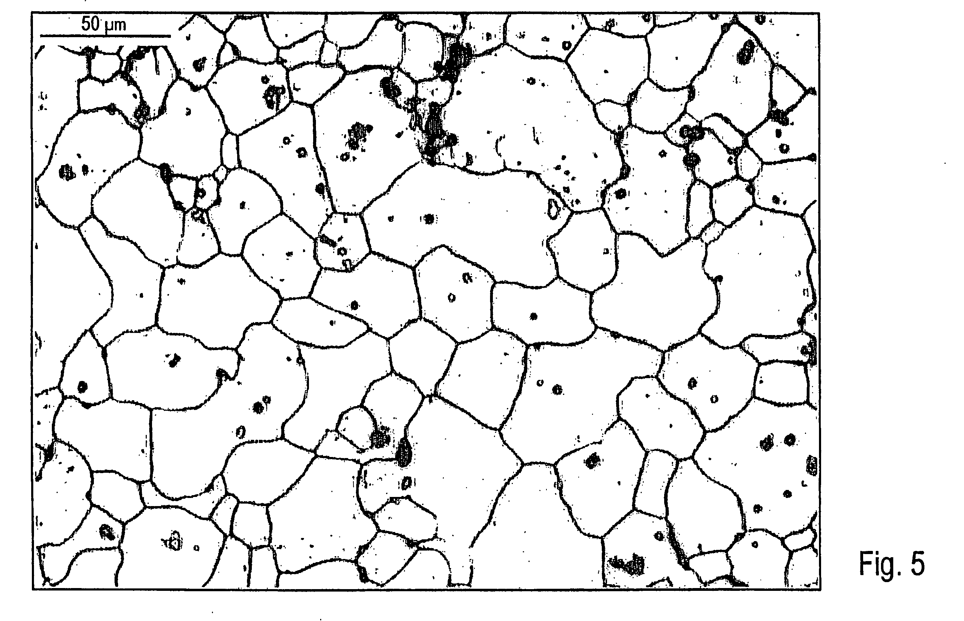

Figur 5 zeigt einen vierten Sinterkörper mit seiner Kornstruktur gemäß der Erfindung, mit einem Maßstab von 50µm. Hergestellt ist der Sinterkörper unter Verwendung eines aus einer Trockenkonversion gewonnenen UO₂-Pulvers mit 2500ppm Fe₂O₃ als Dotierstoff. Die Körner fallen im Mittel etwas größer aus als bei einem Sinterkörper mit 750ppm Fe₂O₃ enthaltenden Dotierstoffzusatz. Da das Fe₂O₃ sich nicht mehr vollständig im Korn des Sinterkörpers löst, wird ein Teil des Fe₂O₃ an den Korngrenzen ausgeschieden, was die Komgrenzengleitung erhöht. Die Menge an zugesetztem Dotierstoff ist jedoch andererseits zu gering, als das ein vollständiges Umschließen der Körner durch den Dotierstoff erfolgen könnte.

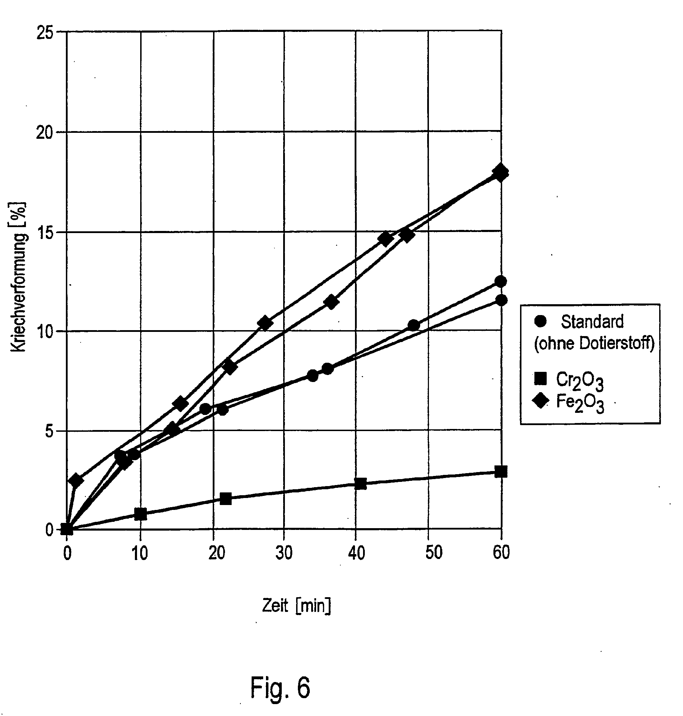

Das Ausmaß der Plastizität eines Sinterkörpers wird vor allem durch sein Kriechverhalten beschrieben. Dies zeigen die Figuren 6 bis 8. Der Ursprung des Kriechprozesses im vorliegenden Fall ist im wesentlichen ein Diffusionskriechen, weniger eine Korngrenzengleiten (wie bei einer Si-Zugabe als Additiv), denn die Körner sind für das Korngrenzengleiten schon zu groß. Beim Diffusionskriechen wandern die Gitterfehlstellen zu den Stellen hoher Spannung und werden dort ausgepreßt, während die Atome zu den Stellen niedriger Spannung oder spannungsfreien Stellen wandern. Eine Eisenverbindung und insbesondere ein Eisenoxid erzeugt einerseits solche Fehlstellen im Kristallit- andererseits wird Fe im Fluorit Gitter des UO₂ eingebaut - erhöht also das Diffusionskriechen beträchtlich - zum Teil um einen Faktor von bis zu oder sogar mehr als 100.

Figur 6 zeigt das transiente Kriechverhalten von Sinterkörpern gemäß der Erfindung im Vergleich zum transienten Kriechverhalten anderer Sinterkörper. Hergestellt sind die Sinterkörper gemäß der Erfindung unter Verwendung eines aus einer Trockenkonversion gewonnenen UO₂-Pulvers mit 1500ppm Fe₂O₃ als Dotierstoff. Das transiente Kriechverhalten gibt dabei den zeitlichen Verlauf der Deformation eines zylindrischen Sinterkörpers unter Einwirkung einer auf die Grundfläche des Sinterkörpers wirkenden Stempelkraft wieder. Das transiente Kriechverhalten der Figur 6 ist bei einer Temperatur von 1400°C und einem Druck von 120Mpa festgehalten. Dabei zeigt sich, daß ein obiger Sinterkörper gemäß der Erfindung im Vergleich zu einem bisherigen Standard und erst recht im Vergleich zu einem mit Cr₂O₃ dotierten Sinterkörper gemäß dem Stand der Technik eine höhere Kriechfähigkeit aufweist und schneller kriecht. Letzteres ist insbesondere wichtig, da bei zum Teil häufig variablen Leistungsschwankungen im Reaktorbetrieb mit steilen Rampen auch eine entsprechend rasche plastische Anpassung des Brennstoffs zur Verbesserung der PCI-Eigenschaften vorteilhaft ist. Dabei kann über die Menge des Dotierstoffs und insbesondere des Anteils einer Eisenverbindung, z. B. von Fe₂O₃, auch eine Anpassung an die transiente Dehnfähigkeit eines Hüllrohrs vorgenommen werden.

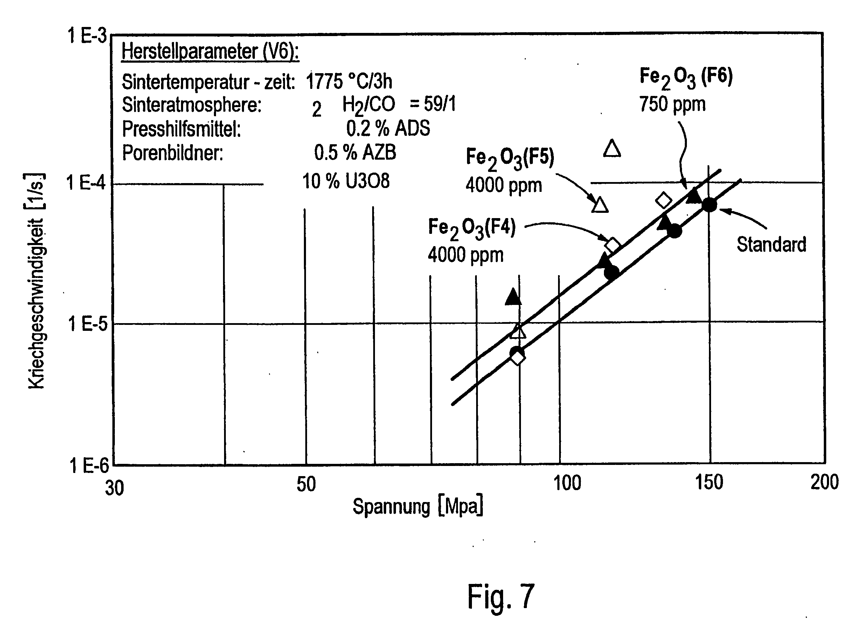

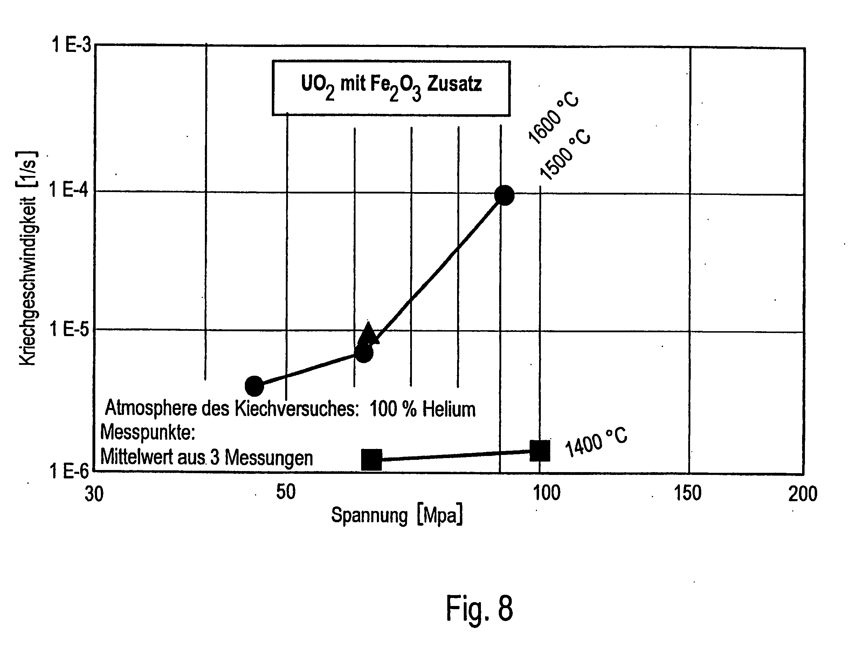

Aus einem transienten Kriechverhalten wie in der Figur 6 lassen sich Kriechraten ermitteln, welche in Figur 7 und Figur 8 für Sinterkörper gemäß der Erfindung gezeigt sind.

In Figur 7 sind Kriechraten von Sinterkörpern gemäß der Erfindung, hergestellt unter Verwendung eines aus einer Trockenkonversion gewonnenen UO₂-Pulvers mit 750ppm -4000ppm Fe₂O₃ als Dotierstoff gezeigt. Im Übrigen enthält die Pulvermischung der Sinterkörper 10% U₂O₃. Der Pulvermischung wurde außerdem 0.2% ADS als Schmiermittel sowie 0.5% AZB als Porenbildner zugegeben. Gesintert wurden die Formkörper in einer H₂/Co₂-Atmosphäre für 3h bei einer Temperatur von 1775°C. Das Kriechverhalten solcher Sinterkörper wurde bei einer Temperatur von 1400°C, im Vergleich zum Kriechverhalten anderer Sinterkörper ermittelt. Dabei zeigt sich, daß selbst bei relativ kleinen Druckspannungen die Plastizität der Sinterkörper gemäß der Erfindung gegenüber herkömmlichen Sinterkörpern mit gleicher oder kleinerer Korngröße deutlich erhöht ist - unter Berücksichtigung der logarithmischen Auftragung handelt es sich um eine Erhöhung der Kriechrate um einen Faktor von wenigstens 2 bis 3.

Figur 8 zeigt Kriechraten von Sinterkörpern gemäß der Erfindung, die unter Verwendung eines aus einer Trockenkonversion gewonnenen UO₂-Pulvers mit 750ppm Fe₂O₃ als Dotierstoff hergestellt wurden. Im Übrigen wurden diese Sinterkörper in einer 100% Helium-Atmosphäre gesintert. Die Figur zeigt die Temperaturabhängigkeit der Kriechraten. Insbesondere sind die Kriechraten bei Temperaturen von 1400°C, 1500°C und 1600°C gezeigt. Dabei wird deutlich, daß ein vorteilhaft moderates Kriechverhalten gerade unter Temperaturbedingungen, wie sie im Reaktorbetrieb herrschen, erreicht werden. Bei 1100°C liegt ein ausreichendes Kriechverhalten vor, das im wesentlichen auf eine Verformung des Korns zurückzuführen ist. Bei 1400°C liegt ein besonders erwünschtes moderates Kriechverhalten vor, das insbesondere besser als das bei einer Nb-Zugabe ist. Für deutlich darüber liegende Temperaturen nimmt die Plastizität der Sinterkörper zu. Ein lineares Verhalten der Kriechrate mit Erhöhung der Druckspannung ist bei sehr hohen Temperaturen nicht mehr zu erwarten. Dennoch ist das Kriechverhalten nicht zu stark. Dann verlören nämlich aufgrund fehlender Adhäsion die Korngrenzen den Zusammenhalt im Gefüge und würden zerfallen. Dies ist z. B. bei einer übermäßigen Silizium-Zugabe der Fall. Ein Zerfließen des Korns ist unerwünscht, da dann scharfe Kanten auftreten, die die PCl-Eigenschaften verschlechtern.

## Patentansprüche

1. Verfahren zur Herstellung eines Kernbrennstoff-Sinterkörpers, bei dem ein ein spaltbares Schwermetalloxid enthaltendes Pulver hergestellt, weiterbehandelt und gesintert wird, wobei das Pulver ein sinteraktives Schwermetalloxid-Pulver umfaßt, welches zu überwiegendem Teil aus einem trocken-chemischen Konversionsverfahren gewonnen wird, und wobei dem Pulver ein sowohl die Korngröße als auch die Plastizität des Sinterkörpers erhöhender, eine Eisenverbindung enthaltender Dotierungsstoff derart zugegeben wird, dass der Gewichtsanteil der Eisenverbindung im Verhältnis zum Gewichtsanteil des Schwermetalloxids im fertigen Kernbrennstoff-Sinterkörper mindestens 100ppm beträgt.

2. Verfahren nach Anspruch 1,
**dadurch gekennzeichnet, daß** das spaltbare Schwermetalloxid ein Oxid eines Schwermetalls aus der Gruppe bestehend aus Uran, Plutonium und Thorium und/oder eine Verbindung eines Schwermetalls aus dieser Gruppe, insbesondere UO₂ und/oder PuO₂ und/oder ThO₂ enthält.

3. Verfahren nach Anspruch 1 oder 2,
**dadurch gekennzeichnet, daß** das Pulver ein U₃O₈-Pulver enthält, das durch Oxidation eines aus einem trocken-chemischen oder einem anderen direkten Konversionsverfahren gewonnenem UO₂-Pulver gewonnen wird.

4. Verfahren nach einem der Ansprüche 1 bis 3,
**dadurch gekennzeichnet, daß** das Pulver feindisperse Teilchen von im wesentlichen 1-1000µm Größe, insbesondere einer Größe von im Mittel 50µm bis 150µm, aufweist.

5. Verfahren nach einem der Ansprüche 1 bis 4,
**dadurch gekennzeichnet, daß** das Pulver Kristallite von im wesentlichen 50-500nm Größe, insbesondere von im Mittel 150nm bis 350nm Größe, aufweist.

6. Verfahren nach einem der Ansprüche 1 bis 5,
**dadurch gekennzeichnet, daß** das Pulver zur Weiterbehandlung homogenisiert und/oder gemahlen wird.

7. Verfahren nach einem der Ansprüche 1 bis 6,
**dadurch gekennzeichnet, daß** das Pulver zur Weiterbehandlung vorkompaktiert und/oder granuliert wird.

8. Verfahren nach einem der Ansprüche 1 bis 7,
**dadurch gekennzeichnet, daß** das Pulver vor dem Sintern zu Formkörpern gepreßt wird.

9. Verfahren nach einem der Ansprüche 1 bis 8,
**dadurch gekennzeichnet, daß** der Dotierungsstoff eine Eisenoxid-Verbindung, insbesondere FeO, Fe₂O₃, Fe₃O₄ Fe(OH)₂ und/oder Fe(OH)₃, enthält.

10. Verfahren nach einem der Ansprüche 1 bis 9,
**dadurch gekennzeichnet, daß** der Dotierungsstoff eine Chrom-Verbindung aus der Gruppe bestehend Cr₂O₃ und CrO₃, enthält.

11. Verfahren nach einem der Ansprüche 1 bis 10,
**dadurch gekennzeichnet, daß** der Dotierungsstoff eine Silizium- und/oder Silikat-Verbindung, insbesondere eine Verbindung aus der Gruppe bestehend aus Silizium-Oxid, Eisensilikat und Magnesium-Silikat, enthält.

12. Verfahren nach einem der Ansprüche 1 bis 11,
**dadurch gekennzeichnet, daß** der Dotierungsstoff eine Verbindung eines Elements aus der Gruppe bestehend aus Magnesium, Niob, Titan, Aluminium, Vanadium und Platin, insbesondere ein Oxid des jeweiligen Elements, enthält.

13. Verfahren nach einem der Ansprüche 1 bis 12,
**dadurch gekennzeichnet, daß** der Dotierungsstoff zugegeben wird in einer Menge, die eine Mikrostruktur des Kembrennstoff-Sinterkörpers zur Folge hat, die eine Kornabmessung von im wesentlichen mehr als 8 µm, insbesondere eine Kornabmessung im Bereich von etwa 10-25µm, aufweist.

14. Verfahren nach einem der Ansprüche 1 bis 13,
**dadurch gekennzeichnet, daß** der Dotierungsstoff zugegeben wird in einer Menge, die eine Plastizität des Kembrennstoff-Sinterkörpers zur Folge hat, welche durch ein moderates Kriechverhalten des Sinterkörpers bei Temperaturen zwischen 1100°C und 1700°C und Drücken von etwa 70-160N/mm², insbesondere bei Temperaturen um etwa 1200°C und bei Drücken von etwa 70-90N/mm², bestimmt ist.

15. Verfahren nach einem der Ansprüche 1 bis 14,
**dadurch gekennzeichnet, daß** der Dotierungsstoff zugegeben wird in einer Menge, welche eine im Gitter des Schwermetalloxids lösliche Menge des Dotierungsstoffs übersteigt.

16. Verfahren nach einem der Ansprüche 1 bis 15,
**dadurch gekennzeichnet, daß** der Dotierungsstoff zugegeben wird in einer Menge zwischen 100ppm und 5000-6000ppm, vorzugsweise in einer Menge zwischen 500ppm und 3000ppm, insbesondere in einer Menge zwischen 750ppm und 2000ppm.

17. Verfahren nach einem der Ansprüche 1 bis 16,
**dadurch gekennzeichnet, daß** der Dotierungsstoff dem Pulver in einem Schritt zu dessen Herstellung und/oder zu dessen Weiterbehandlung, vorzugsweise vor einem Granulierungsschritt, zugegeben wird.

18. Verfahren nach einem der Ansprüche 1 bis 17,
**dadurch gekennzeichnet, daß** der Dotierungsstoff pulverförmig zugegeben wird, wobei das Dotierungsstoffpulver eine Teilchengröße von im wesentlichen weniger als 5µm, vorzugsweise eine Teilchengröße von im wesentlichen weniger als 2µm, aufweist.

19. Verfahren nach einem der Ansprüche 1 bis 18,
**dadurch gekennzeichnet, daß** dem Pulver ein weiterer Dotierungsstoff zugegeben wird, der wenigstens eine Verbindung eines Stoffes aus der Gruppe bestehend aus Zirkonium, Cer, Yttrium, Lanthan, Ytterbium, Cäsium, Calcium, alle weiteren Nebengruppen-Elemente, Lanthanid-Elemente und Actinid-Elemente, insbesondere ein Oxid des Stoffes, enthält.

20. Verfahren nach einem der Ansprüche 1 bis 19,
**dadurch gekennzeichnet, daß** dem Pulver ein Neutronengift zugegeben wird, insbesondere eine Gadolinium-Verbindung und/oder eine Bor-Verbindung und/oder eine Erbium-Verbindung.

21. Verfahren nach einem der Ansprüche 1 bis 20,
**dadurch gekennzeichnet, daß** dem Pulver ein Gleitmittel zugegeben wird, insbesondere ein Stoff aus der Gruppe bestehend aus Stearatverbindung, Stearinsäure, Amid- Verbindung, Glycol-Verbindung und Parafin-Verbindung.

22. Verfahren nach einem der Ansprüche 1 bis 21,
**dadurch gekennzeichnet, daß** dem Pulver ein Porenbildner zugegeben wird, insbesondere ein Stoff aus der Gruppe bestehend aus Ammoniumsalz, Ammonium-Carbonat, Acetat-Verbindung, Oxalat-Verbindung und Zuckerstärke.

23. Verfahren nach einem der Ansprüche 1 bis 22,
**dadurch gekennzeichnet, daß** das Pulver im wesentlichen bei Temperaturen zwischen 1500°C und 1900°C und in einer Atmosphäre mit einem Druck im Bereich des Normaldrucks für eine Dauer von 2-8h gesintert wird.

24. Verfahren nach einem der Ansprüche 1 bis 23,
**dadurch gekennzeichnet, daß** das Pulver etwa auf 93-98.5% der theoretischen Dichte gesintert wird.

25. Verfahren nach einem der Ansprüche 1 bis 24,
**dadurch gekennzeichnet, daß** das Pulver in einer reduzierenden Inertgas-Atmosphäre gesintert wird.

26. Verfahren nach einem der Ansprüche 1 bis 25,
**dadurch gekennzeichnet, daß** beim Sintern ein Sauerstoffpartialdruck der Inertgas-Atmosphäre derart eingestellt wird, daß U₃O₈₋Anteile des Pulvers zu UO₂-Anteilen des Pulvers reduziert werden.

27. Verfahren nach einem der Ansprüche 1 bis 26,
**dadurch gekennzeichnet, daß** ein Sauerstoffpartialdruck der Inertgas-Atmosphäre derart eingestellt wird, daß eine Reduzierung der Eisen-Oxid-Anteile des Pulvers zu Eisen-Anteilen des Pulvers vermieden wird.

## Claims

1. Process for producing a nuclear fuel sintered compact, in which a powder, which contains a fissile heavy metal oxide, is produced, treated further and sintered, the powder comprising a sinter-active heavy metal oxide powder which is obtained predominantly from a dry-chemical conversion process, and a dopant which increases both the grain size and the plasticity of the sintered compact and contains an iron compound being added to the powder in such a manner that the proportion by weight of the iron compound in relation to the proportion by weight of the heavy metal oxide in the finished nuclear fuel sintered compact is at least 100 ppm.

2. Process according to Claim 1, **characterized in that** the fissile heavy metal oxide contains an oxide of a heavy metal selected from the group consisting of uranium, plutonium and thorium and/or a compound of a heavy metal selected from this group, in particular UO₂ and/or PuO₂ and/or ThO₂.

3. Process according to Claim 1 or 2, **characterized in that** the powder contains a U₃O₈ powder which is obtained by oxidation of a UO₂ powder obtained from a dry-chemical or other direct conversion process.

4. Process according to one of Claims 1 to 3, **characterized in that** the powder includes finely dispersed particles of a size of substantially 1-1000 µm, in particular of a size of on average 50 µm to 150 µm.

5. Process according to one of Claims 1 to 4, **characterized in that** the powder has crystallites of a size of substantially 50-500 nm, in particular of a size of on average 150 nm to 350 nm.

6. Process according to one of Claims 1 to 5, **characterized in that** the powder is homogenized and/or milled for further treatment.

7. Process according to one of Claims 1 to 6, **characterized in that** the powder is pre-compacted and/or granulated for further treatment.

8. Process according to one of Claims 1 to 7, **characterized in that** the powder is pressed to form shaped bodies prior to the sintering.

9. Process according to one of Claims 1 to 8, **characterized in that** the dopant contains an iron oxide compound, in particular FeO, Fe₂O₃, Fe₃O₄, Fe(OH)₂ and/or Fe(OH)₃.

10. Process according to one of Claims 1 to 9, **characterized in that** the dopant contains a chromium compound selected from the group consisting of Cr₂O₃ and CrO₃.

11. Process according to one of Claims 1 to 10, **characterized in that** the dopant contains a silicon and/or silicate compound, in particular a compound selected from the group consisting of silicon oxide, iron silicate and magnesium silicate.

12. Process according to one of Claims 1 to 11, **characterized in that** the dopant contains a compound of an element selected from the group consisting of magnesium, niobium, titanium, aluminium, vanadium and platinum, in particular an oxide of the corresponding element.

13. Process according to one of Claims 1 to 12, **characterized in that** the dopant is added in a quantity which leads to a microstructure of the nuclear fuel sintered compact which has a grain dimension substantially of more than 8 µm, in particular a grain dimension in the range from approximately 10 - 25 µm.

14. Process according to one of Claims 1 to 13, **characterized in that** the dopant is added in an amount which leads to plasticity of the nuclear fuel sintered compact, which plasticity is determined by a moderate creep of the sintered compact at temperatures of between 1100°C and 1700°C and pressures of approximately 70 - 160 N/mm², in particular at temperatures of around approximately 1200°C and at pressures of approximately 70 - 90 N/mm².

15. Process according to one of Claims 1 to 14, **characterized in that** the dopant is added in an amount which exceeds an amount of the dopant which is soluble in the lattice of the heavy metal oxide.

16. Process according to one of Claims 1 to 15, **characterized in that** the dopant is added in an amount of between 100 ppm and 5000 - 6000 ppm, preferably in an amount of between 550 ppm and 3000 ppm, in particular in an amount of between 750 ppm and 2000 ppm.

17. Process according to one of Claims 1 to 16, **characterized in that** the dopant is added to the powder in a step involved in the production and/or further treatment thereof, preferably prior to a granulation step.

18. Process according to one of Claims 1 to 17, **characterized in that** the dopant is added in powder form, the dopant powder having a particle size substantially of less than 5 µm, preferably a particle size substantially of less than 2 µm.

19. Process according to one of Claims 1 to 18, **characterized in that** a further dopant is added to the powder, which further dopant contains at least one compound of a substance selected from the group consisting of zirconium, cerium, yttrium, lanthanum, ytterbium, caesium, calcium, all further subgroup elements, lanthanide elements and actinide elements, in particular an oxide of the substance.

20. Process according to one of Claims 1 to 19, **characterized in that** a neutron poison, in particular a gadolinium compound and/or a boron compound and/or an erbium compound is added to the powder.

21. Process according to one of Claims 1 to 20, **characterized in that** a lubricant, in particular a substance selected from the group consisting of stearate compounds, stearic acid, amide compounds, glycol compounds and paraffin compounds, is added to the powder.

22. Process according to one of Claims 1 to 21, **characterized in that** a pore-forming agent, in particular a substance selected from the group consisting of ammonium salts, ammonium carbonates, acetate compounds, oxalate compounds and sugar starch, is added to the powder.

23. Process according to one of Claims 1 to 22, **characterized in that** the powder is sintered substantially at temperatures of between 1500°C and 1900°C and in an atmosphere with a pressure which lies in the region of standard pressure for a duration of 2 - 8 hours.

24. Process according to one of Claims 1 to 23, **characterized in that** the powder is sintered to approximately 93 - 98.5% of the theoretical density.

25. Process according to one of Claims 1 to 24, **characterized in that** the powder is sintered under a reducing inert gas atmosphere.

26. Process according to one of Claims 1 to 25, **characterized in that**, during sintering, an oxygen partial pressure of the inert gas atmosphere is set in such a manner that U₃O₈ fractions of the powder are reduced to form UO₂ fractions of the powder.

27. Process according to one of Claims 1 to 26, **characterized in that** an oxygen partial pressure of the inert gas atmosphere is set in such a manner that reduction of the iron oxide fractions of the powder to form iron fractions of the powder is avoided.

## Revendications

1. Procédé de fabrication d'un élément fritté de combustible nucléaire, dans lequel on prépare une poudre contenant un oxyde de métal lourd fissile, on le traite davantage et on le fritte, la poudre comprenant une poudre d'oxyde de métal lourd active du point de vue du frittage, qui est obtenue pour une partie prépondérante à partir d'un procédé de conversion chimique à sec, et dans lequel on ajoute à la poudre une substance de dopage augmentant tant la granulométrie qu'également la plasticité du corps fritté et contenant un composé du fer, de façon à ce que la proportion en poids du composé du fer par rapport à la proportion en poids de l'oxyde de métal lourd dans le corps fritté de combustible nucléaire fini soit d'au moins 100 ppm.

2. Procédé suivant la revendication 1,
**caractérisé en ce que** l'oxyde de métal lourd fissile contient un oxyde d'un métal lourd du groupe constitué de l'uranium, du plutonium et du thorium et/ou un composé d'un métal lourd de ce groupe, notamment UO₂ et/ou PuO₂ et/ou ThO₂.

3. Procédé suivant la revendication 2,
**caractérisé en ce que** la poudre contient une poudre de U₃O₈, qui est obtenue par oxydation d'une poudre de UO₂ obtenue par chimie à sec ou par un autre procédé de conversion directe.

4. Procédé suivant l'une des revendications 1 à 3,
**caractérisé en ce que** la poudre comprend des particules à l'état finement dispersé d'une dimension de sensiblement 1 à 1000 µm, notamment d'une dimension de 50 µm à 150 µm en moyenne.

5. Procédé suivant l'une des revendications 1 à 4,
**caractérisé en ce que** la poudre comprend des cristallites d'une dimension de sensiblement 50 à 500 nm, notamment de 150 nm à 350 nm en moyenne.

6. Procédé suivant l'une des revendications 1 à 5,
**caractérisé en ce qu'**on homogénéise et/ou on broie la poudre pour le traitement ultérieur.

7. Procédé suivant l'une des revendications 1 à 6,
**caractérisé en ce que** l'on précompacte et/ou on granule la poudre pour le traitement ultérieur.

8. Procédé suivant l'une des revendications 1 à 7,
**caractérisé en ce que** l'on comprime la poudre avant le frittage en comprimés.

9. Procédé suivant l'une des revendications 1 à 8,
**caractérisé en ce que** la substance de dopage contient un composé d'oxyde de fer, notamment FeO, Fe₂O₃, Fe₃O₄Fe(OH)₂ et/ou Fe(OH)₃.

10. Procédé suivant l'une des revendications 1 à 9,
**caractérisé en ce que** la substance de dopage comprend un composé du chrome choisi dans le groupe constitué de Cr₂O₃ et CrO₃.

11. Procédé suivant l'une des revendications 1 à 10,
**caractérisé en ce que** la substance de dopage contient un composé du silicium et/ou de silicate, notamment un composé du groupe constitué de l'oxyde de silicium, du silicate de fer et du silicate de magnésium.

12. Procédé suivant l'une des revendications 1 à 11,
**caractérisé en ce que** la substance de dopage contient un composé d'un élément du groupe constitué du magnésium, du niobium, du titane, de l'aluminium, du vanadium et du platine, notamment un oxyde de cet élément.

13. Procédé suivant l'une des revendications 1 à 12,
**caractérisé en ce que** l'on ajoute la substance de dopage en une quantité qui a pour conséquence une structure microscopique du corps fritté de combustible nucléaire, qui a une dimension de grain de sensiblement plus de 8 µm, notamment une dimension de grain de l'ordre d'environ 10 à 25 µm.

14. Procédé suivant l'une des revendications 1 à 13,
**caractérisé en ce que** l'on ajoute la substance de dopage en une quantité qui a pour conséquence une plasticité du corps fritté de combustible nucléaire qui est déterminée par un comportement modéré au fluage du corps fritté à des températures comprises entre 1100°C et 1700°C et sous des pressions d'environ 70 à 160 N/mm², notamment à des températures d'environ 1200°C et sous des pression d'environ 70 à 90 N/mm².

15. Procédé suivant l'une des revendications 1 à 14,
**caractérisé en ce que** l'on ajoute la substance de dopage en une quantité qui dépasse une quantité de la substance de dopage soluble dans le réseau de l'oxyde de métal lourd.

16. Procédé suivant l'une des revendications 1 à 15,
**caractérisé en ce que** l'on ajoute la substance de dopage en une quantité comprise entre 100 ppm et 5000 à 6000 ppm, de préférence en une quantité comprise entre 500 pm et 3000 ppm, notamment en une quantité comprise entre 750 ppm et 2000 ppm.

17. Procédé suivant l'une des revendications 1 à 16,
**caractérisé en ce que** l'on ajoute la substance de dopage à la poudre dans un stade de sa préparation et/ou de son traitement ultérieur, de préférence avant un stade de granulation.

18. Procédé suivant l'une des revendications 1 à 17,
**caractérisé en ce que** l'on ajoute la substance de dopage sous forme de poudre, la poudre de la substance de dopage ayant une dimension de particule inférieure sensiblement à 5 µm, de préférence une dimension de particule inférieure sensiblement à 2 µm.

19. Procédé suivant l'une des revendications 1 à 18,
**caractérisé en ce que** l'on ajoute à la poudre une autre substance de dopage qui contient au moins un composé d'une substance du groupe constitué du zirconium, du cérium, de l'yttrium, du lanthane, de l'ytterbium, du césium, du calcium, tous les autres éléments de sous-groupes, des éléments de lanthanide et des éléments d'actinide, notamment un oxyde de la substance.

20. Procédé suivant l'une des revendications 1 à 19,
**caractérisé en ce que** l'on ajoute à la poudre un poison de neutrons, notamment un composé du gadolinium et/ou un composé du bore et/ou un composé de l'erbium.

21. Procédé suivant l'une des revendications 1 à 20,
**caractérisé en ce que** l'on ajoute à la poudre un agent lubrifiant, notamment une substance choisie dans le groupe constitué d'un stéarate de l'acide stéarique, d'un composé d'amide, d'un composé glycolique et d'un composé parafinique.

22. Procédé suivant l'une des revendications 1 à 21,
**caractérisé en ce que** l'on ajoute à la poudre un agent porogène, notamment une substance choisie dans le groupe constitué d'un sel d'ammonium, de carbonate d'ammonium, d'un acétate, d'un oxalate et d'un amidon de sucre.

23. Procédé suivant l'une des revendications 1 à 22,
**caractérisé en ce que** l'on fritte la poudre sensiblement à des températures comprises entre 1500°C et 1900°C et dans une atmosphère ayant une pression de l'ordre de la pression normale pendant une durée de 2 à 8 heures.

24. Procédé suivant l'une des revendications 1 à 23,
**caractérisé en ce que** l'on fritte la poudre à peu près jusqu'à 93 à 98,5 % de la masse volumique théorique.

25. Procédé suivant l'une des revendications 1 à 24,
**caractérisé en ce que** l'on fritte la poudre dans une atmosphère réductrice de gaz inerte.

26. Procédé suivant l'une des revendications 1 à 25,
**caractérisé en ce que** l'on règle, lors du frittage, une pression particulière de l'atmosphère de gaz inerte, de façon à ce que des proportions de U₃O₈ de la poudre soient réduites en des proportions de UO₂ de la poudre.

27. Procédé suivant l'une des revendications 1 à 26,
**caractérisé en ce que** l'on règle la pression partielle d'oxygène de l'atmosphère de gaz inerte de façon à empêcher une réduction des proportions d'oxyde de fer de la poudre en proportion de fer de la poudre.
